(19) Europäisches Patentamt

European Patent Office

Office européen des brevets

(11) **EP 0 988 261 B1**

(12) **EUROPEAN PATENT SPECIFICATION**

(45) Date of publication and mention
of the grant of the patent:
**17.12.2003 Bulletin 2003/51**

(51) Int Cl.⁷: **C04B 37/00**, C04B 37/02,
B32B 18/00, C04B 35/536

(21) Application number: **98928842.8**

(22) Date of filing: **04.06.1998**

(86) International application number:
**PCT/US98/10928**

(87) International publication number:
**WO 9805/6734 (17.12.1998 Gazette 1998/50)**

(54) **FLEXIBLE GRAPHITE COMPOSITE ARTICLE FOR PROTECTION AGAINST THERMAL DAMAGE**

FLEXIBLER GRAPHITVERBUNDGEGENSTAND ZUM SCHUTZ GEGEN HITZESCHADEN

ARTICLE COMPOSITE FLEXIBLE EN GRAPHITE ASSURANT UNE PROTECTION CONTRE LA DEGRADATION THERMIQUE

(84) Designated Contracting States:
**DE FR GB IT**

(30) Priority: **10.06.1997 US 872428**

(43) Date of publication of application:
**29.03.2000 Bulletin 2000/13**

(73) Proprietor: **UCAR CARBON TECHNOLOGY
CORPORATION
Wilmington, Delaware 19803 (US)**

(72) Inventors:
• **MERCURI, Robert, Angelo
Seven Hills, OH 44131 (US)**
• **KRASSOWSKI, Daniel, Witold
Parma, OH 44134 (US)**

(74) Representative: **W.P. Thompson & Co.
Coopers Building,
Church Street
Liverpool L1 3AB (GB)**

(56) References cited:
**EP-A- 0 616 884          US-A- 3 404 061**

## Description

## Field of the Invention

This invention relates to a composite article comprising adjacent layers of non-graphitic material, i. e. metal, or in some instances, plastic, and flexible graphite sheet. The composite article minimizes the damaging effect to the composite article of a localized source of high temperature, e.g. a flame, or a stream of hot gas, which is closely adjacent the non-graphitic layer of the composite article, and also to any substrate contiguous to the flexible graphite sheet of the composite article.

## Background of the Invention

Graphites are made up of layer planes of hexagonal arrays or networks of carbon atoms. These layer planes of hexagonally arranged carbon atoms are substantially flat and are oriented or ordered so as to be substantially parallel and equidistant to one another. The substantially flat, parallel equidistant sheets or layers of carbon atoms, usually referred to as basal planes, are linked or bonded together and groups thereof are arranged in crystallites. Highly ordered graphites consist of crystallites of considerable size: the crystallites being highly aligned or oriented with respect to each other and having well ordered carbon layers. In other words, highly ordered graphites have a high degree of preferred crystallite orientation. It should be noted that graphites possess anisotropic structures and thus exhibit or possess many properties which are highly directional. Briefly, graphites may be characterized as laminated structures of carbon, that is, structures consisting of superposed layers or laminae of carbon atoms joined together by weak van der Waals forces. In considering the graphite structure, two axes or directions are usually noted, to wit, the "c" axis or direction and the "a" axes or directions. For simplicity, the "c" axis or direction may be considered as the direction perpendicular to the carbon layers. The "a" axes or directions may be considered as the directions parallel to the carbon layers or the directions perpendicular to the "c" direction. Natural graphites possess a high degree of orientation.

As noted above, the bonding forces holding the parallel layers of carbon atoms together are only weak van der Waals forces. Natural graphites can be treated so that the spacing between the superposed carbon layers or laminae can be appreciably opened up so as to provide a marked expansion in the direction perpendicular to the layers, that is, in the "c" direction and thus form an expanded or intumesced graphite structure in which the laminar character is substantially retained.

Natural graphite flake which has been greatly expanded and more particularly expanded so as to have a final thickness or "c" direction dimension which is at least 80 or more times the original "c" direction dimension can be formed without the use of a binder into cohesive or integrated sheets, e.g. webs, papers, strips, tapes, or the like. The formation of graphite particles which have been expanded to have a final thickness or "c" dimension which is at least 80 times the original "c" direction dimension into integrated sheets without the use of any binding material is believed to be possible due to the excellent mechanical interlocking, or cohesion which is achieved between the voluminously expanded graphite particles.

In addition to flexibility, the sheet material, as noted above, has also been found to possess a.high degree of anisotropy. Sheet material can be produced which has excellent flexibility, good strength and a high degree of orientation.

Briefly, the process of producing flexible, binderless graphite sheet material, e. g. web, paper, strip, tape, foil, mat, or the like, comprises compressing or compacting under a predetermined load and in the absence of a binder, expanded graphite particles which have a "c" direction dimension which is at least 80 times that of the original particles so as to form a substantially flat, flexible, integrated graphite sheet. The expanded graphite particles which generally are worm-like or vermiform in appearance, once compressed, will maintain the compression set. The density and thickness of the sheet material can be varied by controlling the degree of compression. The density of the sheet material can be within the range of from about 80 kg per cubic metre (5 pounds per cubic foot) to about 2000 kg per cubic metre (125 pounds per cubic foot). The flexible graphite sheet material exhibits an appreciable degree of anisotropy, with the degree of anisotropy increasing upon roll pressing of the sheet material to increased density. In roll pressed anisotropic sheet material, the thickness, i. e. the direction perpendicular to the sheet surface comprises the "c" direction and the directions ranging along the length and width, i.e. along or parallel to the surfaces comprises the "a" directions.

European Pat. No. 616884 discloses a process for the preparation of a laminate of at least one metal layer and at least one layer of flexible graphite includes producing a non-detachable bond between the graphite and the metal without using a mechanical anchoring device and without using a known adhesive. Initially, a contact surface-active agent from the group including organosilicon compounds, perfluorinated compounds and metal soaps is applied in a thin layer to at least one of the surfaces to be bonded. Then the surfaces to be bonded are brought into contact and bonded together by the action of pressure and heat.

## Brief Description of the Drawings

    FIG. 1, shows a continuous sheet of flexible graphite contiguous to and in conductive heat relationship with a continuous metal sheet;

FIG. 2 shows an elevation view of the arrangement of FIG. 1 in combination with a localized high temperature heat source;

FIG. 3 shows a continuous sheet of flexible graphite intermediate contiguous to metal sheets, with the arrangement being held in place by clamps;

FIG. 4 shows the arrangement of FIG. 3 mechanically deformed into a pan shaped configuration;

FIG. 5 shows a composite article formed of concentric inner and outer metal tubes contiguous an intermediate sheet of flexible graphite; and

FIG. 6 shows a composite article formed of a continuous plastic sheet contiguous to a sheet of flexible graphite.

## Detailed Description of the Invention

Graphite is a crystalline form of carbon comprising atoms bonded in flat layered planes with weaker bonds between the planes. By treating panicles of graphite, such as natural graphite flake, with an intercalant , e.g. a solution of sulfuric and nitric acid, the crystal structure of the graphite reacts to form a compound of graphite and the intercalant. The treated particles of graphite are hereafter referred to as "particles of intercalated graphite". Upon exposure to high temperature, the particles of intercalated graphite expand in dimension as much as 80 or more times its original volume in an accordion-like fashion in the "c" direction, i.e. in the direction perpendicular to the crystalline planes of the graphite. The exfoliated graphite particles are vermiform in appearance, and are therefore commonly referred to as worms. The worms may be compressed together into flexible sheets which, unlike the original graphite flakes, can be formed and cut into various shapes.

A common method for manufacturing graphite foil from flexible graphite is described by Shane et al in U.S. Pat. No. 3,404,061.

In the typical practice of the Shane et al method, natural graphite flakes are intercalated by dispersing the flakes in a solution containing an oxidizing agent of, e.g. a mixture of nitric and sulfuric acid. The intercalation solution contains oxidizing and other intercalating agents known in the art. Examples include those containing oxidizing agents and oxidizing mixtures, such as solutions containing nitric acid, potassium chlorate, chromic acid, potassium permanganate, potassium chromate, potassium dichromate, perchloric acid, and the like, or mixtures, such as for example, concentrated nitric acid and chlorate, chromic acid and phosphoric acid, sulfuric acid and nitric acid, or mixtures of a strong organic acid, e.g. trifluoroacetic acid, and a strong oxidizing agent soluble in the organic acid.

In a preferred embodiment, the intercalating agent is a solution of a mixture of sulfuric acid, or sulfuric acid and phosphoric acid, and an oxidizing agent, i.e.

nitric acid, perchloric acid, chromic acid, potassium permanganate. hydrogen peroxide, iodic or periodic acids, or the like. Although less preferred, the intercalation solutions may contain metal halides such as ferric chloride, and ferric chloride mixed with sulfuric acid, or a halide, such as bromine as a solution of bromine and sulfuric acid or bromine in an organic solvent.

After the flakes are intercalated, any excess solution is drained from the flakes. The quantity of intercalation solution retained on the flakes after draining may range from 20 to 150 parts of solution by weight per 100 parts by weight of graphite flakes (pph) and more typically about 50 to 120 pph. Alternatively, the quantity of the intercalation solution may be limited to between 10 to 50 parts of solution per hundred parts of graphite by weight (pph) which permits the washing step to be eliminated as taught and described in U.S. Pat. No. 4,895,713.

The intercalated graphite flakes are exfoliated into flexible graphite by exposing them to a flame for only a few seconds at temperature greater than 700°C, more typically 1000°C or higher. The exfoliated graphite particles, or worms, are then compressed and subsequently roll pressed into a densely compressed flexible graphite foil sheet of desired density and thickness and substantially increased anisotropy with respect to thermal conductivity and other physical properties. Suitable exfoliation methods and methods for compressing the exfoliated graphite particles into thin foils are disclosed in the aforementioned U.S. Pat. No. 3,404,061 to Shane et al. It is conventional to compress the exfoliated worms in stages with the product of the first or early stages of compression referred to in the art as "flexible graphite mat". The flexible graphite mat is then further compressed by roll pressing into a standard density sheet or foil of preselected thickness. A flexible graphite mat may be thus compressed by roll pressing into a thin sheet or foil of between 0.0508-1.778 mm (2-70 mils) in thickness with a density approaching theoretical density, although a density of about 1120 kg per cubic metre (70 lbs./ft$^3$) is acceptable for most applications.

Roll pressed flexible graphite is known to be a relatively good thermal barrier with a thermal conductivity along and parallel to its surface, which is approximately twenty (20) or more times greater than through its thickness.

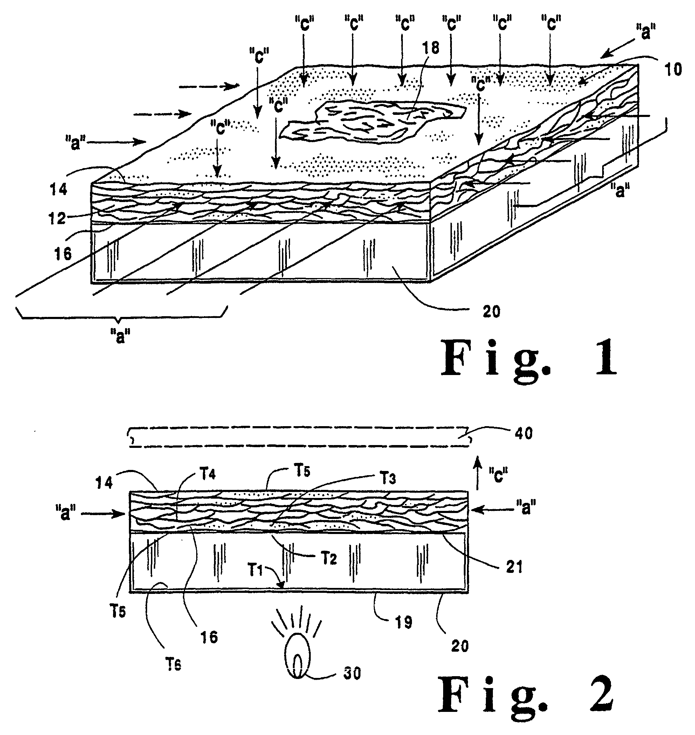

Certain thermal properties of unexfoliated, intercalated graphite have been utilized in the manufacture of wall or floor coverings (U.S. Pat. No. 5,176,863) and in gasket applications (U.S. Pat. No. 5,494,506). In the present invention, the highly anisotropic thermal conductivity characteristics of roll pressed flexible graphite are employed in addressing high temperature shielding applications. FIG. 1 shows a continuous sheet of roll pressed flexible graphite at 10, i.e. with no holes or openings, contiguous to a continuous metal sheet 20 similarly without holes or openings. Roll pressed flexible graphite sheet 10 is formed of compressed, intercalated, exfoliated graphite particles 12 aligned so that the "c" axis direction of the particles 12, and sheet 10, is transverse to the planar parallel surfaces 14, 16 of continuous sheet 10, i.e. transverse to the thickness of sheet 10. The "a" directions of the compressed, intercalated, exfoliated graphite particles 12 and sheet 10 are along and between the planar surfaces 14, 16 of sheet 12 and extend in aU directions along and within sheet 12 parallel to planar surfaces 14, 16 as represented at 18 in FIG. 1.

Heat flow, or thermal transfer by conduction occurs when heat flows through a body by the transference of the kinetic energy of individual atoms or molecules without mixing of the atoms or molecules. When a material is heated, the atoms or molecules are given greater vibratory motion, that is, greater kinetic energy; in some way, probably by collisions, these atoms or molecules share this increased energy with their neighbors, which in turn pass this energy along to those beyond, and so on. For the measurement of heat flow by conduction, the basic law of heat transfer can be written in the form of a rate equation:

$$\text{Rate} = \frac{\text{Driving Force}}{\text{Resistance}}$$

in which the driving force is the temperature difference across a solid body, since it is apparent that heat can flow only when there is an inequality of temperature. This law, known as Fourier's Law, states that the rate of heat flow through a body is proportional to the temperature drop, to the area, and inversely proportional to the thickness of the body. The mathematical expression of Fourier's Law is:

$$\frac{Q}{t} = \frac{kA\,(T_2 - T_1)}{L}$$

where "Q" is the amount of heat energy transferred in time "t", "A" is the area of the body perpendicular to the direction of heat flow, and "$(T_2 - T_1)$" is the temperature difference between opposite sides or ends of the body, "L" is the thickness of the body in the direction of heat flow, and "k" is a constant which is defined by this equation and is called the thermal conductivity of the particular substance constituting the body. If "Q" is measured in Btu, "t" in hours, "A" in square feet, "$T_2$" and "$T_1$" in degrees Fahrenheit, and "L" in feet, then "k" is expressed as Btu per hour per square foot per degree Fahrenheit per foot; "k" can also be expressed in scientific units as watts per meter degree Kelvin (W/M. °K)

When each of the terms in the equation defining "k" is equal to one, "k" is termed the coefficient of thermal conductivity. The numerical value of the coefficient of thermal conductivity depends upon the substance of which the body is made and upon its average temperature. When the thickness of the is very small, in the case of small pockets of air, or with thin adhesive coatings or layers, the effect on heat transfer by conduction through surrounding bodies is only slightly affected by such pockets or layers and coatings, i.e. there is substantially no thermal barrier to heat transfer by conduction.

With reference to FIG. 2, which is an elevation view of the composite of FIG. 1, a localized high temperature heat source 30 is located closely adjacent continuous metal sheet 20, of substantially isotropic i.e. uniform thermal conductivity which can for example be plain carbon or an alloyed steel which is intended to shield a heat damageable substance indicated generally at 40. Other metals can be used, such as aluminum, copper, the noble metals, and their alloys. Referring to FIG. 2, localized heat source 30, which can be a flame, an automobile exhaust pipe through which hot gases are flowing and the like, establishes a temperature $T_1$ at the adjacent surface 19 of continuous steel sheet 20. With $T_2$ being lower than $T_1$, at the opposite surface 21, heat will travel from $T_1$ to $T_2$ at a rate determined by the substantially uniform, i.e. non-anisotropic thermal conductivity of the steel e.g. 10 to 20 watts per meter per degree Kelvin in all directions, and, without the presence of contiguous, roll pressed, flexible continuous, graphite sheet 10, the low temperature $T_2$ will increase, due to conduction of heat energy, to approximately the high value of $T_1$. With the contiguous flexible graphite sheet 10 in place as shown in FIG. 2, in conductive heat transfer relation with steel sheet 20, i.e. there is no substantial barrier to heat transfer by conduction, and the rising temperature $T_2$ will establish a corresponding temperature $T_3$ at the portion of flexible graphite sheet 10 abutting steel sheet 20. The temperature $T_3$ is applied to two very different thermal conductivity paths (due to the anisotropy of roll pressed flexible graphite sheet 10, e. g. at least 20:1, with respect to thermal conductivity), the "c" direction across the thickness of flexible graphite sheet 10 from planar surface 16 to planar surface 14 and the "a" directions. In the path of the "c" direction, the thermal conductivity is relatively low, about 1/3 that of steel sheet 20. The other thermal conductivity path, the "a" directions, parallel to planar surfaces 16, 14 of flexible graphite sheet 10 have a relatively very high thermal conductivity. In these "a" paths, the thermal conductivity is typically at least ten times that of steel. Consequently heat, i.e. thermal energy, passes slowly by conduction across the thickness of flexible graphite sheet 10 ("c" direction), but very rapidly through the sheet 10 in directions parallel to planar surfaces 16, 14 ("a" direction). As a result heat moves rapidly by conduction from $T_3$ to $T_4$, keeping $T_2$ relatively low, while increasing temperature $T_4$ and causing heat, thermal energy, to flow from $T_4$ to $T_5$ by conduction in steel sheet 20, since heat passing from $T_2$ to $T_5$ through steel sheet 10 moves at a rate of about 1/10 that of heat passing from $T_3$ to $T_4$ in the "a" direction of flexible graphite sheet 10. The result of the above-described configuration is to spread the conductive heat energy from source 30 over continuous, substantially thermally non-anisotropic steel (i.e. isotropic) sheet 20 and also roll pressed thermally anisotropic continuous flexible graphite sheet 10. As a consequence of the above-described thermal phenomena, a high temperature localized hot spot at $T_2$ is avoided and the temperature at the surface 16 of steel sheet 20 is quite uniform and stays much lower than $T_1$, as does the temperature of flexible graphite sheet 10 which is in conductive thermal transfer relation with steel sheet 20. In order to achieve the aforedescribed thermal performance, it is necessary that the respective sheets 10 and 12 be continuous, i.e. without holes, cut-outs or other openings which would interfere with the conduction of heat within and through the respective sheets.

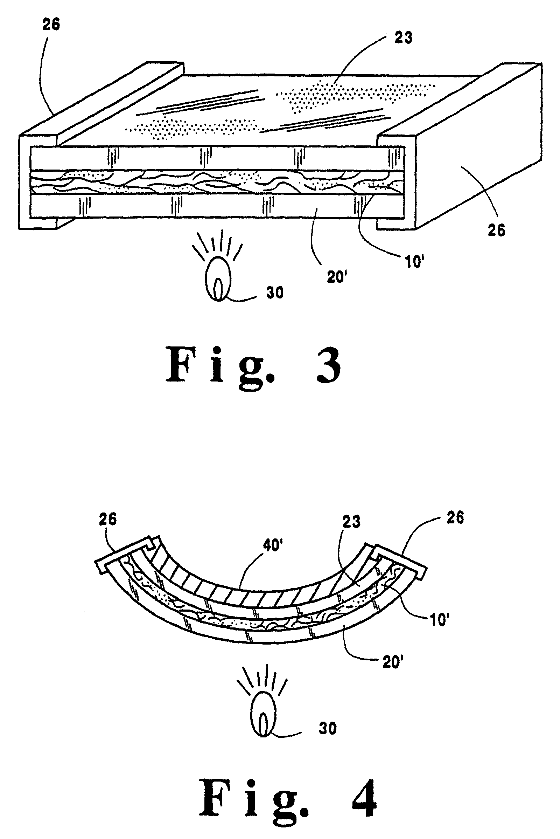

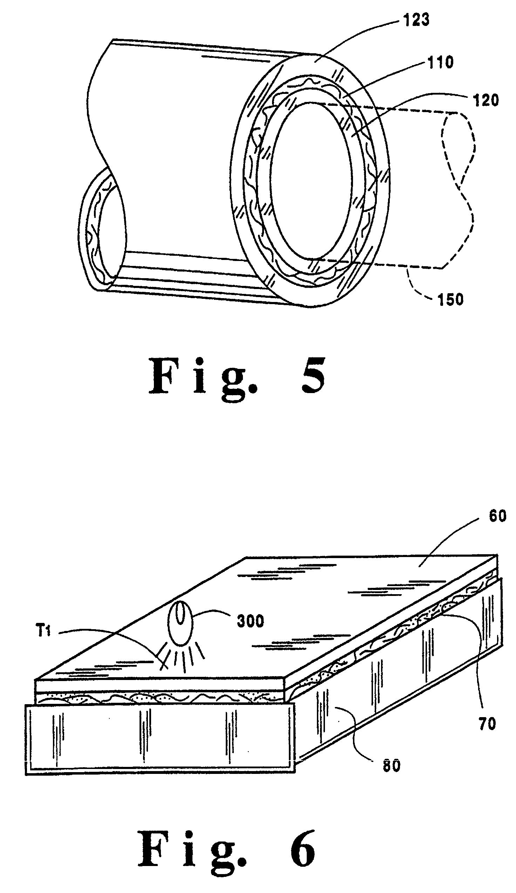

FIG. 3 shows an additional steel sheet 23 overlying and contiguous to and in conductive thermal transfer relation with flexible graphite sheet 10 which is intermediate steel sheets 20', 23 and the composite is clamped in place by clamps 26. In FIG. 4, the composite of FIG. 3 has been mechanically deformed, e.g. by stamping, into a pan shaped configuration, with the addition of a covering heat damageable rug or mat. FIG. 5 shows a composite formed of inner steel sheet tube 120 wrapped around an automotive muffler pipe 150 through which engine exhaust gases, indicated at 130, are passed at very high temperatures e.g. up to 538°C (1000°F) and constitute a high temperature heat source. Contiguous, to inner steel sheet 120 is intermediate roll pressed, flexible graphite sheet 110 which is enclosed within contiguous outer steel sheet tube 123.

In all of the foregoing embodiments of FIGS. 2-5, the thermal phenomena corresponds to that described in connection with FIG. 1 and 2. That is, localized high temperature hot spots are avoided and rugs or mats 40' are not subjected to heat damage.

The composite article of FIG. 6 comprises a continuous plastic sheet 60 contiguous, continuous flexible graphite sheet 70 which rests on contiguous heat damageable substrate 80 e.g. felt, plastic, rubber. Plastic sheet 60 has a substantially uniform, i.e. isotropic, thermal conductivity which is greater than the thermal conductivity of thermally anisotropic flexible graphite sheet in its "c" direction but substantially less than the thermal conductivity of the graphite sheet in the "a" direction. Heat from localized high temperature source 300 would ordinarily melt plastic sheet 60 at T, and damage substrate 80.

However, heat passing through plastic sheet 60 is "spread out" due to the presence of roll pressed, anisotropic, continuous flexible graphite sheet 70 in conductive heat transfer relationship therewith, which results in the same thermal phenomena described in connection with FIGS. 1 and 2, and heat damage to substrate 80 is avoided.

The graphite and non-graphitic components of the composite article of the present invention are affixed and held together in conductive heat transfer relation by clamps, as above described, or by the use of very thin adhesive coatings or layers, e.g. 5 to 10 microns thick, which do not significantly affect conductive heat transfer. In addition to pan-shaped and concentric tubular configurations, the heat shielding composite article can be formed as parabolic and spherical reflectors, furnace covers and enclosures, handle grips, seat covers, curtains, and shades.

**Claims**

1. In combination, a composite heat shielding device in the form of a continuous sheet of roll pressed thermally anisotropic flexible graphite arranged in conductive heat transfer relationship with a continuous substrate comprising thermally conductive heat shielding non-graphitic material of substantially uniform thermal conductivity, and a high temperature heat source closely adjacent said heat shielding thermally conductive non-graphitic substrate, said continuous heat shielding thermally conductive non-graphitic substrate being intermediate said continuous sheet of flexible graphite and said high temperature heat source.

2. A combination according to claim 1, wherein the non-graphitic material comprises a metal.

3. A combination according to claim 2 further comprising a second continuous metal sheet affixed to the continuous sheet of roll pressed thermally anisotropic flexible graphite.

4. A combination according to claim 3, wherein the continuous sheet of roll pressed thermally anisotropic flexible graphite is arranged intermediate first and second continuous metal sheets and affixed thereto, said flexible graphite sheet being in a conductive heat transfer relationship with said first and second continuous metal sheets.

5. A combination in accordance with claim 4, wherein the first and second continuous metal sheets are mechanically deformed and congruent.

6. A combination in accordance with claim 4 or claim 5, wherein said first and second metal sheets are in the form of an outer tube and an inner tube which are concentrically arranged.

7. A combination according to claim 1, wherein the non-graphitic material comprises a sheet of plastic and wherein the continuous sheet of roll pressed thermally anisotropic flexible graphite is arranged intermediate the sheet of plastic and a heat damageable substrate.

**Patentansprüche**

1. Kombination, bestehend aus einer Kompositwärmeschildvorrichtung in Form einer fortlaufenden Bahn aus gewalztem thermisch anisotropem elastischem Graphit, das in einem leitfähigen Wärmeübertragungsverhältnis zu einem fortlaufenden Substrat angeordnet ist, das ein thermisch leitfähiges wärmeabschirmendes Nicht-Graphit-Material mit einer im Wesentlichen gleichförmigen thermischen Leitfähigkeit umfasst, und einer Hochtemperaturwärmequelle direkt benachbart zum wärmeabschirmenden thermisch leitfähigen Nicht-Graphit-Substrat, wobei das fortlaufende wärmeabschirmende thermisch leitfähige Nicht-Graphit-Substrat zwischen der fortlaufenden Bahn aus elastischem Graphit und der Hochtemperaturwärmequelle angeordnet ist.

2. Kombination nach Anspruch 1, wobei das Nicht-Graphit-Material Metall umfasst.

3. Kombination nach Anspruch 2, die des Weiteren eine zweite fortlaufende Blechbahn umfasst, die an der fortlaufenden Bahn aus gewalztem thermisch anisotropem elastischem Graphit befestigt ist.

4. Kombination nach Anspruch 3, wobei die fortlaufende Bahn aus gewalztem thermisch anisotropem elastischem Graphit zwischen einer ersten und einer zweiten fortlaufenden Blechbahn angeordnet und daran befestigt ist, wobei die elastische Graphitbahn zu der ersten und der zweiten fortlaufenden Blechbahn in einem leitfähigen Wärmeübertragungsverhältnis steht.

5. Kombination nach Anspruch 4, wobei die erste und die zweite fortlaufende Blechbahn mechanisch verformt und kongruent sind.

6. Kombination nach Anspruch 4 oder 5, wobei die erste und die zweite Blechbahn in Form eines äußeren Rohrs und eines inneren Rohrs vorliegen, die konzentrisch angeordnet sind.

7. Kombination nach Anspruch 1, wobei das Nicht-Graphit-Material eine Kunststofffolie umfasst und die fortlaufende Bahn aus gewalztem thermisch anisotropem elastischem Graphit zwischen der Kunststofffolie und einem Substrat, das durch Wärme beschädigt werden kann, angeordnet ist.

**Revendications**

1. En combinaison, dispositif de blindage thermique composite sous forme de feuille continue de graphite souple thermiquement anisotrope laminé agencé en une relation de transfert thermique conducteur avec un substrat continu comprenant une matière non graphitique de blindage thermique thermiquement conductrice d'une conductivité thermique sensiblement uniforme, et une source de chaleur à haute température à proximité étroite dudit substrat non graphitique thermiquement conducteur de blindage thermique, ledit substrat non graphitique thermiquement conducteur de blindage thermique continu étant situé entre ladite feuille continue de graphite souple et ladite source de chaleur à haute température.

2. Combinaison selon la revendication 1, dans laquelle la matière non graphitique comprend un métal.

3. Combinaison selon la revendication 2, comprenant en outre une deuxième feuille de métal continue fixée à la feuille continue de graphite souple thermiquement anisotrope laminé.

4. Combinaison selon la revendication 3, dans laquelle la feuille continue de graphite souple thermiquement anisotrope laminé est placée entre des première et deuxième feuilles de métal continues et fixée à celles-ci, ladite feuille de graphite souple étant en relation de transfert thermique conducteur avec lesdites première et deuxième feuilles de métal.

5. Combinaison selon la revendication 4, dans laquelle les première et deuxième feuilles de métal continues sont déformées mécaniquement et coïncidentes.

6. Combinaison selon la revendication 4 ou 5, dans laquelle les première et deuxième feuilles de métal ont la forme d'un tube externe et d'un tube interne qui sont agencés concentriquement.

7. Combinaison selon la revendication 1, dans laquelle la matière non graphitique comprend une feuille de plastique et dans laquelle la feuille continue de graphite souple thermiquement anisotrope laminé est agencée entre la feuille de plastique et un substrat détériorable thermiquement.

# Fig. 1

# Fig. 2

# Fig. 3

# Fig. 4

Fig. 5

Fig. 6